(19) Europäisches Patentamt
European Patent Office
Office européen des brevets

(11) **EP 1 956 748 B1**

(12) **EUROPÄISCHE PATENTSCHRIFT**

(45) Veröffentlichungstag und Bekanntmachung des Hinweises auf die Patenterteilung:
**31.08.2011 Patentblatt 2011/35**

(51) Int Cl.:
*H04L 7/04* *(2006.01)*   *H04L 7/08* *(2006.01)*
*H04L 27/26* *(2006.01)*

(21) Anmeldenummer: **07024418.1**

(22) Anmeldetag: **17.12.2007**

(54) **Verfahren und Vorrichtung zur Zeitversatz-Synchronisation von OFDM Systemen**

Method and device for time offset synchronisation of OFDM systems

Procédé et dispositif de synchronisation du décalage temporel de systèmes OFDM

(84) Benannte Vertragsstaaten:
**DE FR GB**

(30) Priorität: **06.02.2007 DE 102007005931**
**22.06.2007 DE 102007028784**
**03.08.2007 DE 102007036675**

(43) Veröffentlichungstag der Anmeldung:
**13.08.2008 Patentblatt 2008/33**

(73) Patentinhaber: **Rohde & Schwarz GmbH & Co. KG**
**81671 München (DE)**

(72) Erfinder: **Kuhn, Christian, Dr.**
**80689 München (DE)**

(74) Vertreter: **Körfer, Thomas et al**
**Mitscherlich & Partner**
**Patent- und Rechtsanwälte**
**Sonnenstrasse 33**
**80331 München (DE)**

(56) Entgegenhaltungen:
WO-A-02/078280   CA-A1- 2 551 988
DE-A1- 10 338 521   US-A1- 2004 223 554
US-A1- 2005 220 228   US-B1- 6 381 251
US-B1- 7 006 587

**Beschreibung**

Die Erfindung betrifft ein Verfahren und eine Vorrichtung zur Zeitversatz-Synchronisation (Timingsynchronisation) bei digitalen Übertragungsverfahren, insbesondere bei OFDM Übertragungsverfahren.

Herkömmlich wird zur Synchronisation, wie unter anderem in der CA 2 551 988 A1 dargestellt, durch Korrelation einer bekannten Synchronisations-Sendefolge mit der empfangenen Symbolfolge eine Korrelations-Metrik bestimmt. Durch Maximumsuche in dieser Metrik wird der Synchronisations-Zeitpunkt ermittelt. Im Fall der Übertragung nach dem OFDM Verfahren kann es bei schwankendem Kapazitätsbedarf zu der Belegung unterschiedlicher Anzahlen der verfügbaren Unterträger und damit zu einer Schwankung der Sendeleistung im Zeitbereich kommen. Dies resultiert in einer Dominanz der leistungsstärkeren Sendezeitpunkte in der Korrelations-Metrik, was zu fehlerhaft detektierten Synchronisations-Zeitpunkten führt.

Die US 7,006,587 B1 zeigt ein Verfahren zur Timingsynchronisation auf Basis einer Timingmetrik, welche mittels Korrelation bestimmt wird. Es wird dabei ein kammförmiges Raster gebildet, mit welchem nach Maxima der Metrik in festem Abstand gesucht wird.

Ein Synchronisationsverfahren, welches eine Leistungsdetektion und eine anschließende Symbolsuche zur Synchronisation nutzt wird von der US 6,381,251 B1 offenbart.

Die US 2005/220228 beschreibt wie honrelationsimpulse mit einandem venglichen wenden, und erst dann als nichtig betnachtet wenden, wenn den zeitliche abstand zwischen den Pulsen stimmt, und den Pegeluntenschied den Pulsen innenhalb einem gewissen Beneich bleibt.

Der Erfindung liegt die Aufgabe zu Grunde, ein Verfahren und eine Vorrichtung zur Timingsynchronisation in digitalen Übertragungsverfahren zu schaffen, welche insbesondere bei über dem Zeitverlauf schwankender Gesamt-Sendeleistung zuverlässig die Synchronisations-Zeitpunkte ermittelt.

Die Aufgabe wird erfindungsgemäß für das Verfahren durch die Merkmale des unabhängigen Anspruchs 1 und durch die Merkmale des unabhängigen Anspruchs 6 für die Vorrichtung gelöst. Vorteilhafte Weiterbildungen sind Gegenstand der hierauf rückbezogenen Unteransprüche.

Zur Synchronisation bei digitalen Übertragungsverfahren werden Synchronisations-Blöcke zur Anzeige der Grenzen der Sendeblöcke genutzt. Eine Korrelations-Metrik wird gebildet. Durch Suche nach den Maxima der Korrelations-Metrik werden die Synchronisations-Zeitpunkte gefunden. Durch Einbeziehung einer bekannten Senderahmen-Struktur wird der Suchraum reduziert. Es ergibt sich eine deutliche Verringerung der Fehldetektionen von Synchronisationszeitpunkten.

Vorteilhafterweise sind die Maxima der Korrelations-Metrik Kandidaten der Synchronisations-Zeitpunkte, also des direkt folgenden Senderahmen-Beginns. Durch Berücksichtigung der bekannten Senderahmen-Struktur werden diese Kandidaten bestätigt oder verworfen. Dies führt zu einer zuverlässigeren Bestimmungen der Synchronisations-Zeitpunkte. Das digitale Übertragungsverfahren ist bevorzugt ein OFDM Verfahren. Bei einem solchen Verfahren kann durch die Erfindung insbesondere eine Fehldetektion der Synchronisations-Zeitpunkte auf Grund von zeitlich schwankender Anzahl allokierter Unter-Träger im Frequenzbereich und damit zeitlich schwankender Leistung vermieden werden.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:

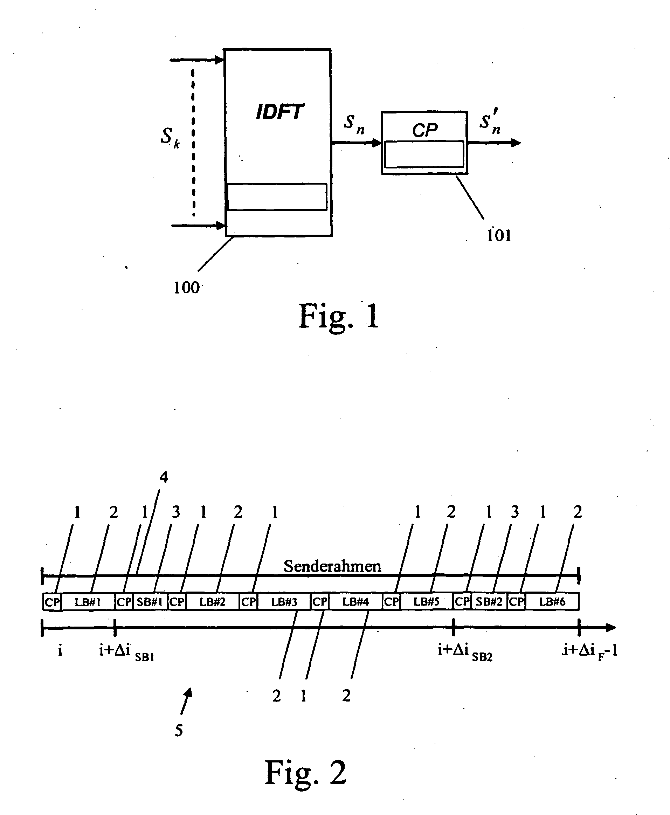

Fig. 1    ein beispielhaftes Blockschaltbild für die senderseitige Erzeugung von OFDM Symbolen;

Dabei wird zunächst ein stark ausgeprägtes Maximum der Korrelationsmetrik ausgewählt. In einem aus der Senderahmen-Struktur entnommenen Zeitabstand gegenüber dem stark ausgeprägten Maximum innerhalb des Suchraums wird nach weiteren Maxima gesucht. Es ergibt sich eine deutliche Verringerung der Fehldetektionen von Synchronisationszeitpunkten.

Vorteilhafterweise sind die Maxima der Korrelations-Metrik Kandidaten der Synchronisations-Zeitpunkte, also des direkt folgenden Senderahmen-Beginns. Durch Berücksichtigung der bekannten Senderahmen-Struktur werden diese Kandidaten bestätigt oder verworfen. Dies führt zu einer zuverlässigeren Bestimmungen der Synchronisations-Zeitpunkte. Das digitale Übertragungsverfahren ist bevorzugt ein OFDM Verfahren. Bei einem solchen Verfahren kann durch die Erfindung insbesondere eine Fehldetektion der Synchronisations-Zeitpunkte auf Grund von zeitlich schwankender Anzahl allokierter Unter-Träger im Frequenzbereich und damit zeitlich schwankender Leistung vermieden werden.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:

Fig. 1    ein beispielhaftes Blockschaltbild für die senderseitige Erzeugung von OFDM Symbolen;
Fig. 2    den beispielhaften Aufbau eines Senderahmens in einem digitalen Übertragungsverfahren;
Fig. 3    ein Blockschaltbild eines beispielhaften Kanalmodells einer OFDM Übertragung;
Fig. 4    ein beispielhaftes OFDM Sendesignal im Zeitbereich und die entsprechende Ressourcenallokation im Frequenzbereich;

Fig. 5   den Werteverlauf einer beispielhaften Korrelations-Metrik während 20 Senderahmen;
Fig. 6   den Werteverlauf einer beispielhaften Korrelations-Metrik während 20 Senderahmen mit Bestimmung der Sendeblock-Grenzen durch herkömmliche Schwellwertbildung;
Fig. 7   eine vereinfachte Darstellung der Funktionsweise einer beispielhaften Ausgestaltung des erfindungsgemäßen Verfahrens;
Fig. 8   den Werteverlauf einer beispielhaften Korrelations-Metrik während 20 Senderahmen mit Bestimmung der Sendeblock-Grenzen durch das erfindungsgemäße Verfahren und
Fig. 9   ein Blockschaltbild einer beispielhaften Ausgestaltung der erfindungsgemäßen Vorrichtung;

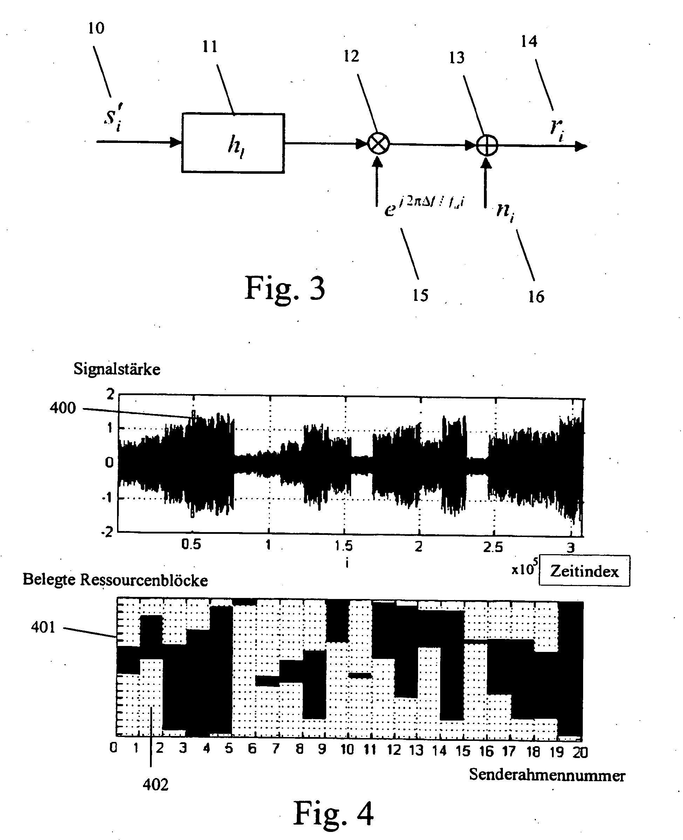

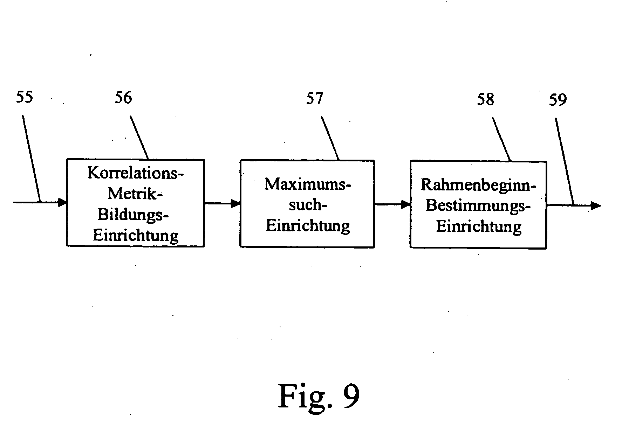

Zunächst werden anhand der Fig. 1 - 3 der Aufbau und die vereinfachte Funktionsweise einer Übertragung nach dem OFDM Verfahren gezeigt. Mittels Fig. 4 - 8 werden die Funktionsweise und die Ergebnisse einer Ausgestaltung des erfindungsgemäßen Verfahrens gezeigt. Abschließend wird in Fig. 9 anhand eines Blockschaltbildes einer beispielhaften erfindungsgemäßen Vorrichtung deren Funktion erläutert. Identische Elemente wurden in ähnlichen Abbildungen zum Teil nicht wiederholt dargestellt und beschrieben.

Die genutzten Abkürzungen und Formelzeichen gehen aus den folgenden Tabellen hervor:

| Abkürzung | Beschreibung |
|---|---|
| CP | Cyclic Prefic, Guardintervall |
| DFT | Disktrete Fouriertransformation |
| EUTRA | Evolved Universal Terrestrical Radio Access |
| IDFT | Inverse Diskrete Fouriertransformation |
| LB | Long Block |
| OFDM | Orthogonal Frequency Division Multipe Access |
| SB | Short Block |

| Formelzeichen | Beschreibung |
|---|---|
| $f$ | Frequenz |
| $f_a$ | Abtastfrequenz |
| $\Delta_f$ | Trägerfrequenzversatz |
| $h_l$ | Impulsantwort des frequenzselektiven Kanals |
| $i$ | Zeitindex |
| $i_m$ | Geschätzter Startzeitpunkt für den $m$. Senderahmen |
| $\Delta i_{SB1}, \Delta i_{SB2}$ | Relative Startzeitpunkte der SBs innerhalb des Senderahmens |
| $\Delta i_F$ | Länge des Senderahmens |
| $j$ | Imaginäre Einheit |
| $k$ | Unterträgerindex des OFDM Übertragungsverfahren |
| $L$ | Kanalgedächtnis |
| $\wedge_i$ | Timingmetrik |
| $m$ | Rahmenindex |
| $n_i$ | Störsignal |
| $N_{CP}$ | Länge des CPs |
| $N_{FFT}, \; N_{FFT}^{(SB)}, \; N_{FFT}^{(LB)}$ | Transformationslängen der IDFT |
| $P_i$ | Leistungsanteil der Timingmetrik |

(fortgesetzt)

| Formelzeichen | Beschreibung |
|---|---|
| $r_i$ | Empfangssequenz |
| $R_i$ | Korrelationsanteil der Timingmetrik |
| $S_n$ | IDFT des Sendesymbols |
| $s'_n$ | IDFT des Sendesymbols mit CP |
| $s'_i$ | Sendesequenz, beinhaltet i.a. mehrere Senderahmen |
| $S_k$ | Sendesymbol |
| $T, T_{min}$ | Metrikschwellen |

Fig. 1 zeigt ein beispielhaftes Blockschaltbild für die senderseitige Erzeugung von OFDM Symbolen. Die Datensymbole $S_k$ mit $0{\leq}k{<}N_{FFT}$ werden zunächst durch eine inverse diskrete Fouriertransformation (IDFT) 100 in die Symbole $s_n$ mit $0{\leq}n{<}N_{FFT}$ transformiert und anschließend mit einem zyklischen Präfix (*Cyclic Prefix* CP) der Länge $N_{CP}$ versehen 101. Das resultierende OFDM Symbol besteht somit aus dem CP und einem Nutzanteil. Für die Sendesymbole $s'_n$ mit $-N_{CP}{\leq}n{<}N_{FFT}$ gilt somit die folgende Beziehung:

$$s'_n = \begin{cases} s_n & 0 \le n < N_{FFT} \\ & \text{für} \\ s_{n \bmod N_{FFT}} & -N_{CP} \le n < 0 \end{cases}$$

Fig. 2 zeigt einen beispielhaften Senderahmen 4 eines OFDM Übertragungsverfahrens. Der Senderahmen 4 ist aus mehreren mit LB bezeichneten, langen Blöcken 2, mehreren mit SB bezeichneten, kurzen Blöcken 3 und mehreren mit CP bezeichneten Schutzintervallen 1 zusammengesetzt. Die langen Blöcke 2 und die kurzen Blöcke 3 beinhalten die zu übertragende Information. Die langen Blöcke (LB) werden durch eine IDFT der Länge $N_{FFT}^{(LB)}$ und die kurzen Blöcke (SB) durch eine IDFT der Länge $N_{FFT}^{(SB)}$ erzeugt. Die Schutzintervalle 1 dienen als Synchronisations-Symbolfolgen. Jedem langen Block 2 und jedem kurzen Block 3 wird ein Schutzintervall 1 vorangestellt. Das Schutzintervall 1 wird durch einen zyklischen Präfix, eine Wiederholung zumindest eines Teils des folgenden langen Blocks 2 oder kurzen Blocks 3 gebildet.

Fig. 3 zeigt das Blockschaltbild eines beispielhaften Kanalmodells. Die Signalform einer Folge von Sendesymbolen 10 wird durch die Übertragungsfunktion des Kanals 11 umgeformt. Durch einen Mischer 12 wird der im System auftretende Trägerfrequenzversatz 15 zwischen Sender und Empfänger modelliert. Durch einen Addierer 13 wird das im System auftretende weiße Rauschen 16 modelliert. Eine Empfangssymbolfolge 14 wird erzeugt. Das Sendesignal wird über den intersymbolinterferenzbehafteten Kanal mit den zeitinvarianten Koeffizienten $h_l$ und dem Gedächtnis $L$ übertragen. Zudem werden ein Frequenzversatz $\Delta f$ bezogen auf die Symbolrate $f_a$ sowie eine Rauschstörung $n_i$ mit konstanter Leistung modelliert. Dementsprechend ergibt sich das resultierende Empfangssignal zu:

$$r_i = \left( \sum_{l=0}^{L} h_l s'_{i-l} \right) \cdot e^{j2\pi\Delta f / f_a i} + n_i .$$

Auf Basis dieser Empfangswerte muss im Sender eine Zeitversatz-Synchronisation (Timingsynchronisation) durchgeführt werden, um die Startzeitpunkte $\hat{i}_m$ der Rahmen zu finden. Durch den bekannten Aufbau des Senderahmens wie in Fig. 2 gezeigt, können von $\hat{i}_m$ ausgehend die Positionen der einzelnen OFDM Symbole pro Rahmen ermittelt werden.

In Fig. 4 wird ein beispielhaftes Sendesignal im Zeitbereich und die entsprechende Ressourcenallokation dargestellt. Der Zeitverlauf $s_i'$ 400 ist für 20 Senderahmen mit der zugehörigen spektralen Allokation 401 dargestellt. Für diesen beispielhaften EUTRA Übertragungsmodus können Spektral zwischen 0 und 96 Ressourcen-Blöcke pro Senderahmen 402 allokiert werden. Ein Ressourcen-Block umfasst hierbei 12 OFDM Unterträger $S_k$. Wie dem Signalverlauf zu entnehmen ist, können durch variierende Ressourceallokationen erhebliche Unterschiede in der Sendeleistung auftreten.

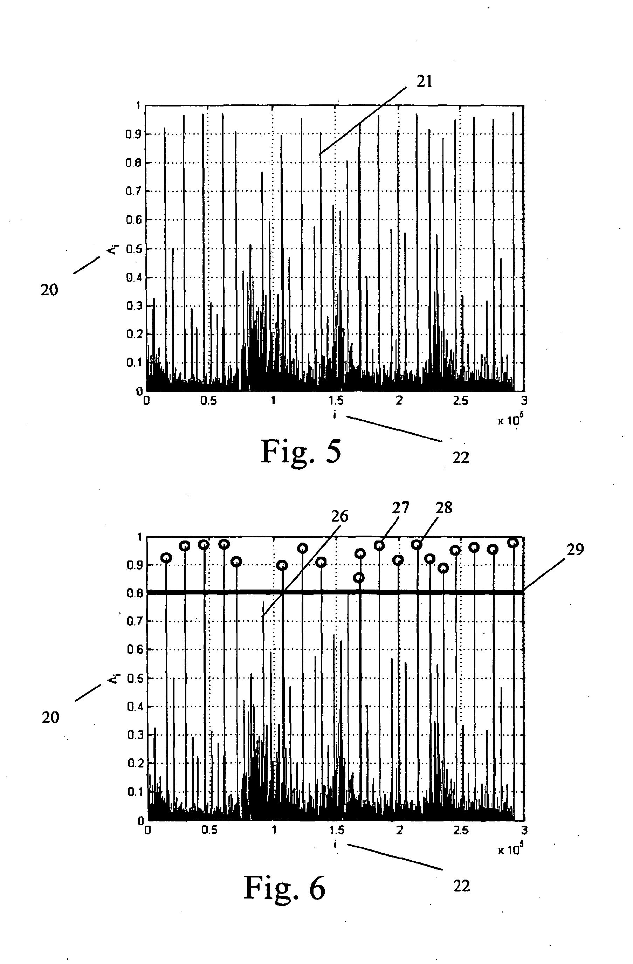

Fig. 5 zeigt den Werteverlauf einer beispielhaften zu dem Sende-Signal aus Fig. 4 gehörigen Korrelations-Metrik während 20 Senderahmen. Über dem Zeitindex 22 ist die Größe der Metrik 20 aufgetragen. Deutliche Maxima 21 in teilweise regelmäßigen Abständen sind erkennbar. Einige der lokalen Maxima repräsentieren die Startzeitpunkte der Sendezeitpunkte der Senderahmen. Jedoch existieren auch weitere lokale Maxima mit einem nicht zu vernachlässigendem Metrikwert, die zu einer Fehldetektion der Startzeitpunkte führen kann. Die Metrik $\wedge_i$ nutzt wiederholt auftretende Sequenzen $s_i'$ von Sendesymbolen aus. Die inhärenten Symbolwiederholungen durch den Einsatz eines Schutzintervalls werden ausgenutzt. Hierzu werden die Schutzintervalle der kurzen Blöcke verwendet. Zudem ist aber auch die zusätzliche Verwendung der Schutzintervalle der langen Blöcke möglich, um mehr Robustheit zu erzielen für Übertragungsmodi mit kurzen Schutzintervallen. Die Zeitversatzmatrix (Timingmetrik)

$$\Lambda_i = \frac{|R_i|^2}{(P_i)^2}$$

ergibt sich aus einem Korrelationsmaß $R_i$ und einem Leistungsmaß $P_i$. Die Korrelationskomponente wird vorzugsweise mit der Beziehung

$$R_i = \sum_{\xi=i+\Delta i_{SB1}}^{i+\Delta i_{SB1}+N_{CP}-1} r_\xi \cdot r_{\xi+N_{FFT}^{(SB)}}^* + \sum_{i=i+\Delta i_{SB2}}^{i+\Delta i_{SB2}+N_{CP}-1} r_\xi \cdot r_{\xi+N_{FFT}^{(SB)}}^*$$

ermittelt. Die Parameter $\Delta i_{SB1}$ und $\Delta i_{SB2}$ entsprechen hierbei dem relativen zeitlichen Abstand der beiden kurzen Blöcken SB vom Senderahmenbeginn. Durch die Multiplikation des Empfangswerts $r_\xi$ mit dem konjugiert komplexen Empfangswert im festen Abstand $r_{\xi+N_{FFT}^{(SB)}}^*$ entsteht durch den Frequenzversatz $\Delta f$ im Empfangssignal eine konstante Phase pro aufakkumuliertem Korrelationswert. Durch die Betragsbildung in der letztendlichen Metrikberechnung wird diese Phase eliminiert und somit hat der Frequenzfehler keinen Einfluss auf die Timingmetrik. Ebenso gilt die Unabhängigkeit vom Frequenzfehler für das Leistungsmaß, welches vorzugsweise über

$$P_i = \frac{1}{2}\left[ \sum_{\xi=i+\Delta i_{SB1}}^{i+\Delta i_{SB1}+N_{CP}-1} \left( |r_\xi|^2 + |r_{i+N_{FFT}^{(SB)}}|^2 \right) + \sum_{\xi=i+\Delta i_{SB2}}^{i+\Delta i_{SB2}+N_{CP}-1} \left( |r_\xi|^2 + |r_{i+N_{FFT}^{(SB)}}|^2 \right) \right]$$

bestimmt wird. Im entsprechenden Indexbereich $0 \leq i \leq I - \Delta i_F$ ergeben sich somit Metrikwerte die zur Bestimmung von Schätzwerten $\hat{i}_m$ für die Startzeitpunkte der jeweiligen Senderahmen herangezogen werden. In diesem Zusammenhang entspricht $I$ der Gesamtzahl der Empfangswerte $r_i$ und $\Delta i_F$ der Länge eines Senderahmens.

In Fig. 6 ist ein herkömmliches Verfahren der Synchronisation durch Schwellwertbildung dargestellt. Sämtliche detektierte Maxima 27, 28, welche oberhalb eines Schwellwerts 29 liegen, werden als Synchronisations-Zeitpunkte angesehen. Sämtliche Maxima 26, welche unterhalb des Schwellwerts 29 liegen, werden nicht als Synchronisations-Zeitpunkte angesehen. Dadurch werden einige korrekte Synchronisations-Zeitpunkte nicht detektiert, während einige inkorrekte Zeitpunkte als Synchronisations-Zeitpunkte detektiert werden.

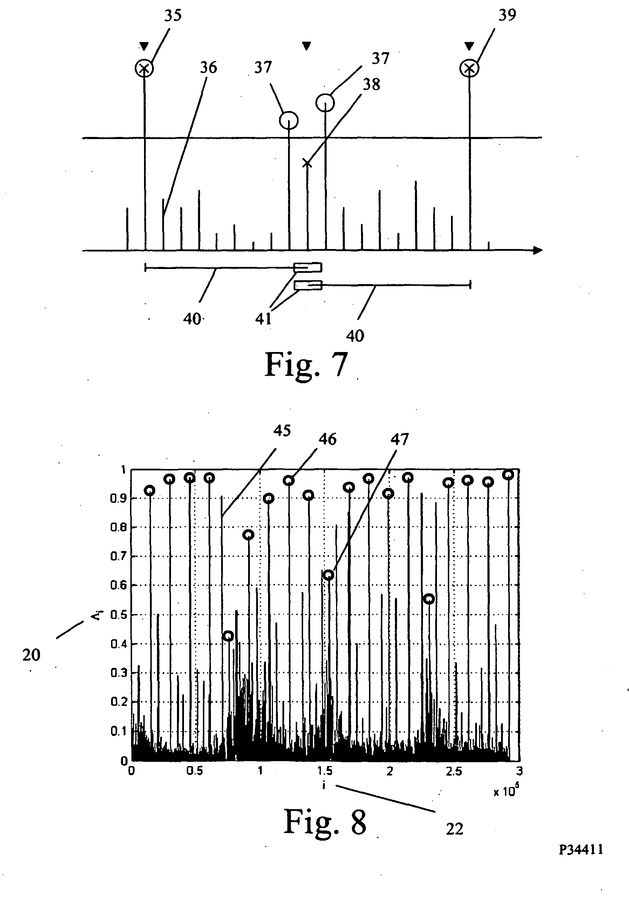

Fig. 7 zeigt eine vereinfachte Darstellung der Funktionsweise des erfindungsgemäßen Verfahrens. Wie auch in Fig. 5 und Fig. 6 ist die Höhe der Korrelations-Metrik über der Nummer des Korrelations-Metrik-Werts aufgetragen. Die korrekten Synchronisations-Zeitpunkte 35, 38, 39 sind mit einem Kreuz markiert. Bei einem herkömmlichen Schwellenwert-Verfahren, wie anhand von Fig. 6 beschrieben, werden jedoch anstatt dem korrekten Synchronisations-Zeitpunkt 38 die inkorrekten Synchronisations-Zeitpunkte 37 detektiert. Bei Anwendung des erfindungsgemäßen Verfahrens zur Synchronisation werden zunächst sehr stark ausgeprägte Maxima 35 und 39 der Korrelationsmetrik, welche Sendezeitpunkten mit großer Anzahl allokierter Unter-Träger entsprechen, ausgewählt. Auf Grund der hohen Sendeleistung zu diesen Zeitpunkten ist die Wahrscheinlichkeit, dass es sich bei diesen Maxima der Korrelationsmetrik tatsächlich um korrekt detektierte Senderahmenstartzeitpunkte handelt sehr groß. Ausgehend von diesen als korrekt detektiert angenommenen Maxima wird nun in einem aus der Senderahmenstruktur entnommenen Zeitabstand 40 innerhalb eines Suchintervalls 41 nach weiteren lokalen Maxima gesucht. Durch die Einschränkung des Suchraums werden die lokalen Maxima 37, welche keinem Synchronisations-Zeitpunkt entsprechen, nicht detektiert. Stattdessen wird der korrekte Synchronisations-Zeitpunkt 38 gefunden.

In Fig. 8 wird anhand des beispielhaften Werteverlaufs der Korrelations-Metrik aus Fig. 5 und Fig. 6 ein Ergebnis des erfindungsgemäßen Verfahrens dargestellt. Es ist deutlich erkennbar, dass ein großer Anteil der Synchronisations-Zeitpunkte mit den mit dem herkömmlichen Schwellenwert-Verfahren erzeugten Synchronisations-Zeitpunkten aus Fig. 6 übereinstimmen. Einzelne Werte sehr hoher Korrelations-Metrik 45 wurden jedoch korrekterweise nicht als Synchronisations-Zeitpunkte detektiert. Gleichzeitig wurden einzelne Werte mit eher geringer Korrelations-Metrik 47 als Synchronisations-Zeitpunkte detektiert. Die Anzahl fehlerhaft detektierter Synchronisations-Zeitpunkte ist gegenüber dem Schwellwert-Verfahren, wie in Fig. 6 dargestellt, deutlich geringer. Im vorliegenden Beispiel wurden durch das erfindungsgemäße Verfahren alle Rahmenstartzeitpunkte korrekt erkannt.

Fig. 9 zeigt ein Blockschaltbild einer beispielhaften Ausgestaltung der erfindungsgemäßen Vorrichtung. Als Eingangsdaten 55 werden die empfangene Symbolfolge, die erwartete Synchronisations-Symbolfolge und die bekannte Rahmenstruktur des Übertragungsverfahrens herangezogen. Eine Korrelations-Metrik-Bildung-Einrichtung 56 bildet eine Korrelations-Metrik. Diese entsteht durch Korrelation der empfangenen Symbolfolge und der erwarteten Synchronisations-Symbolfolge. Eine Maximumsuch-Einrichtung 57 ermittelt die lokalen Maxima der Korrelations-Metrik. Eine Rahmenbeginn-Bestimmungs-Einrichtung 58 bestimmt anhand der lokalen Maxima der Korrelations-Metrik und der bekannten Rahmenstruktur des Übertragungsverfahrens Synchronisations-Zeitpunkte 59.

Die Erfindung ist nicht auf das dargestellte Ausführungsbeispiel beschränkt. Wie bereits erwähnt, kann unter anderem die Synchronisation für unterschiedliche digitale Übertragungsverfahren neben OFDM eingesetzt werden. Alle vorstehend beschriebenen Merkmale oder in den Figuren gezeigten Merkmale sind im Rahmen der Erfindung beliebig miteinander kombinierbar.

**Patentansprüche**

1. Verfahren zur Zeitversatz-Synchronisation bei digitalen Übertragungsverfahren mit einem oder mehreren Synchronisations-Blöcken (1), die Sendeblock-Grenzen von übertragenen Sendeblöcken (2, 3) anzeigen,
   wobei die Detektierung der Synchronisations-Blöcke (1) durch Bildung einer Korrelations-Metrik und einer Suche nach Maxima (35, 38, 39) der Korrelations-Metrik innerhalb eines Suchraums (41) erfolgt,
   wobei eine bekannte Senderahmen-Struktur (5) des Übertragungsverfahrens zur Eingrenzung des Suchraums (41) genutzt wird,
   **dadurch gekennzeichnet,**
   **dass** zunächst zumindest ein stark ausgeprägtes Maximum (35, 39) der Korrelationsmetrik ausgewählt wird, und
   **dass** in einem aus der Senderahmen-Struktur (5) entnommenen Zeitabstand (40) gegenüber dem stark ausgeprägten Maximum (35, 39) innerhalb des Suchraums (41) nach weiteren Maxima (38) gesucht wird.

2. Verfahren nach Anspruch 1,
   **dadurch gekennzeichnet,**
   **dass** Senderahmen (4) nach Maxima (27, 28, 35, 38, 39) der Korrelations-Metrik beginnen.

3. Verfahren nach Anspruch 1 oder 2,

**dadurch gekennzeichnet,**
**dass** die Maxima (27, 28, 35, 38, 39) der Korrelations-Metrik Kandidaten für einen direkt folgenden Senderahmen-Beginn sind, und
**dass** die Kandidaten durch Berücksichtigung der bekannten Senderahmen-Struktur (5) bestätigt oder verworfen werden.

4. Verfahren nach einem der Ansprüche 1 bis 3,
**dadurch gekennzeichnet,**
**dass** die Synchronisations-Blöcke (1) durch Wiederholung von wenigstens einem Teil des folgenden Sendeblocks (2, 3) gebildet werden.

5. Verfahren nach einem der Ansprüche 1 bis 4,
**dadurch gekennzeichnet,**
**dass** das digitale Übertragungsverfahren ein Orthogonal Frequency Division Multiplex (OFDM) Verfahren mit orthogonalen Subträgern ist.

6. Vorrichtung zur Zeitversatz-Synchronisation bei digitalen Übertragungsverfahren mit einem oder mehreren Synchronisations-Blöcken (1), die Sendeblock-Grenzen von übertragenen Sendeblöcken (2, 3) anzeigen, mit einer Korrelations-Metrik-Bildungs-Einrichtung (56), einer Maximumsuch-Einrichtung (57) und einer Rahmenbeginn-Bestimmungs-Einrichtung (58),
wobei die Maximumsuch-Einrichtung (57) innerhalb eines Suchraums Maxima (35, 38, 39) einer Korrelations-Metrik sucht, die von der Korrelations-Metrik-Bildungs-Einrichtung (57) gebildet wurde,
wobei die Rahmenbeginn-Bestimmungs-Einrichtung (58) eine bekannte Senderahmen-Struktur (5) des Übertragungsverfahrens zur Eingrenzung des Suchraums (41) nutzt,
**dadurch gekennzeichnet,**
**dass** die Maximumsuch-Einrichtung (57) zunächst zumindest ein stark ausgeprägtes Maximum (35, 39) der Korrelationsmetrik auswählt, und
**dass** die Rahmenbeginn-Bestimmungs-Einrichtung (58) in einem aus der Senderahmen-Struktur (5) entnommenen Zeitabstand (40) gegenüber dem stark ausgeprägtes Maximum (35, 39) innerhalb des Suchraums (41) nach weiteren Maxima (38) sucht.

7. Vorrichtung nach Anspruch 6,
**dadurch gekennzeichnet,**
**dass** die Senderahmen (4) nach Maxima (27, 28, 35, 38, 39) der Korrelations-Metrik beginnen.

8. Vorrichtung nach Anspruch 6 oder 7,
**dadurch gekennzeichnet,**
**dass** die Maxima (27, 28, 35, 38, 39) der Korrelations-Metrik Kandidaten für einen direkt folgenden Senderahmen-Beginn sind, und
**dass** die Kandidaten von der Rahmenbeginn-Bestimmungs-Einrichtung (58) durch Berücksichtigung der bekannten Senderahmen-Struktur (5) bestätigt oder verworfen werden.

9. Vorrichtung nach einem der Ansprüche 6 bis 8,
**dadurch gekennzeichnet,**
**dass** die Synchronisations-Blöcke (1) durch Wiederholung von wenigstens einem Teil des folgenden Sendeblocks (2, 3) gebildet werden.

10. Vorrichtung nach einem der Ansprüche 6 bis 9,
**dadurch gekennzeichnet,**
**dass** das digitale Übertragungsverfahren ein Orthogonal Frequency Division Multiplex (OFDM) Verfahren mit orthogonalen Subträgern ist.

**Claims**

1. Method for time offset synchronization in digital transmission methods having one or more synchronization blocks (1) which indicate transmit block limits of transmitted transmit blocks (2, 3),
wherein the synchronization blocks (1) are detected by forming a correlation metric and searching for peaks (35, 38, 39) of the correlation metric within a search space (41),
a known transmit frame structure (5) of the transmission method being used for localizing the search space (41), **characterized in that** initially at least one highly distinct peak (35, 39) of the correlation metric is selected and **in that** in a time interval (40) taken from the transmit frame structure (5), further peaks (38) are searched for within the search space (41) in comparison with the highly distinct peak (35, 39).

2. Method according to Claim 1, **characterized in that** transmit frames (4) start after peaks (27, 28, 35, 38, 39) of the correlation metric.

3. Method according to Claim 1 or 2, **characterized in that** the peaks (27, 28, 35, 38, 39) of the correlation metric are candidates for a directly following transmit frame start, and **in that** the candidates are confirmed or discarded by taking into consideration the known transmit frame structure (5).

4. Method according to one of Claims 1 to 3, **characterized in that** the synchronization blocks (1) are formed by repeating at least one part of the following transmit block (2, 3).

5. Method according to one of Claims 1 to 4, **characterized in that** the digital transmission method is an orthogonal frequency division multiplex (OFDM) method comprising orthogonal subcarriers.

6. Device for time offset synchronization in digital transmission methods having one or more synchronization blocks (1) which indicate transmit block limits of transmitted transmit blocks (2, 3), comprising a correlation metric forming device (56), a peak-searching device (57) and a frame start determining device (58),
wherein the peak-searching device (57) searches within a search space for peaks (35, 38, 39) of a correlation metric which has been formed by the correlation metric forming device (56),
wherein the frame start determining device (58) utilizes a known transmit frame structure (5) of the transmission method for localizing the search space (41),
**characterized in that**
the peak-searching device (57) initially selects
at least one highly distinct peak (35, 39) of the correlation metric, and **in that**
the frame start determining device (58) searches in a time interval (40) taken from the transmit frame structure (5) for further peaks (38) within the search space (41) compared with the highly distinct peak (35, 39).

7. Device according to Claim 6, **characterized in that** the transmit frames (4) start after peaks (27, 28, 35, 38, 39) of the correlation metric.

8. Device according to Claim 6 or 7, **characterized in that** the peaks (27, 28, 35, 38, 39) of the correlation metric are candidates for a directly following transmit frame start, and **in that** the candidates are confirmed or discarded by the frame start determining device (58) by taking into consideration the known transmit frame structure (5).

9. Device according to one of Claims 6 to 8, **characterized in that**
the synchronization blocks (1) are formed by repeating at least one part of the following transmit block (2, 3).

10. Device according to one of Claims 6 to 9, **characterized in that**
the digital transmission method is an orthogonal frequency division multiplex (OFDM) method comprising orthogonal subcarriers.

**Revendications**

1. Procédé de synchronisation du décalage temporel dans des procédés de transmission numériques comportant un ou plusieurs blocs de synchronisation (1), qui présente des limites de bloc d'émission pour des blocs d'émission transmis (2, 3),
dans lequel la détection des blocs de synchronisation (1) est effectuée par formation d'une métrique de corrélation et d'une recherche des maxima (35, 38, 39) de la métrique de corrélation à l'intérieur d'un espace de recherche (41),
dans lequel une structure de trame d'émission connue (5) du procédé de transmission est utilisée pour limiter l'espace de recherche (41),
**caractérisé en ce que**,
tout d'abord au moins un maximum fortement allongé (35, 39) de la métrique de corrélation est sélectionné, et

**en ce que** l'on recherche d'autres maxima (38) à l'intérieur de l'espace de recherche (41) par rapport au maximum fortement allongé (35,39) pendant une période de temps (40) extraite de la structure de trame d'émission (5).

2. Procédé selon la revendication 1, **caractérisé en ce que** des trames d'émission (4) commencent après les maxima (27, 28, 35, 38, 39) de la métrique de corrélation.

3. Procédé selon la revendication 1 ou 2, **caractérisé en ce que** les maxima (27, 28, 35, 38, 39) de la métrique de corrélation sont candidats pour un début de trame d'émission immédiatement suivant, et **en ce que** les candidats sont confirmés ou rejetés en prenant en considération de la structure de trame d'émission connue (5).

4. Procédé selon l'une des revendications 1 à 3, **caractérisé en ce que** les blocs de synchronisation (1) sont formés par répétition d'au moins une partie du bloc d'émission suivant (2, 3).

5. Procédé selon l'une des revendications 1 à 4, **caractérisé en ce que** le procédé de transmission numérique est un procédé de multiplexage par répartition en fréquence orthogonale (OFDM) comportant des sous-porteuses orthogonales.

6. Dispositif de synchronisation du décalage temporel dans des procédés de transmission numériques comportant un ou plusieurs blocs de synchronisation (1), qui présentent des limites de bloc d'émission des blocs d'émission transmis (2, 3), comportant un dispositif de formation de métrique de corrélation (56), un dispositif de recherche de maximum (57) et un dispositif de détermination de début de trame (58), dans lequel le dispositif de recherche de maximum (57) recherche à l'intérieur d'un espace de recherche des maxima (35, 38, 39) d'une métrique de corrélation, qui est formée par le dispositif de formation de métrique de corrélation (56), dans lequel le dispositif de détermination de début de trame (58) utilise une structure de trame d'émission connue (5) du procédé de transmission pour limiter l'espace de recherche (41), **caractérisé en ce que** le dispositif de recherche de maximum (57) sélectionne tout d'abord au moins un maximum fortement allongé (35, 39) de la métrique de corrélation, et **en ce que** le dispositif de détermination de début de trame (58) recherche d'autres maxima (38) à l'intérieur de l'espace de recherche (41) par rapport au maximum fortement allongé (35, 39) pendant une période de temps (40) extraite de la structure de trame d'émission (5).

7. Dispositif selon la revendication 6, **caractérisé en ce que**, les trames d'émission (4) commencent après les maxima (27, 28, 35, 38, 39) de la métrique de corrélation.

8. Dispositif selon la revendication 6 ou 7, **caractérisé en ce que** les maxima (27, 28, 35, 38, 39) de la métrique de corrélation sont candidats pour un début de trame d'émission immédiatement suivant, et **en ce que** les candidats du dispositif de détermination de début de trame (58) sont confirmés ou rejetés en prenant en considération de la structure de trame connue (5).

9. Dispositif selon l'une des revendications 6 à 8, **caractérisé en ce que** les blocs de synchronisation (1) sont formés par répétition d'au moins une partie du bloc d'émission suivant (2, 3).

10. Dispositif selon l'une des revendications 6 à 9, **caractérisé en ce que** le procédé de transmission numérique est un procédé de multiplexage par répartition en fréquence orthogonale (OFDM) comportant des sous-porteuses orthogonales.

Fig. 1

Fig. 2

10

11

12

13

14

$s_i'$

$h_l$

$e^{j2\pi\Delta f l_{i,i}}$

$n_i$

$r_i$

15

16

## Fig. 3

Signalstärke

400

2

1

0

-1

-2

0.5  1  1.5  2  2.5  3

i

x10⁵  Zeitindex

Belegte Ressourcenblöcke

401

0 1 2 3 4 5 6 7 8 9 10 11 12 13 14 15 16 17 18 19 20

Senderahmennummer

402

## Fig. 4

Fig. 5

Fig. 6

Fig. 7

Fig. 8

P34411

13

55  56  57  58  59

| Korrelations-Metrik-Bildungs-Einrichtung | Maximums-such-Einrichtung | Rahmenbeginn-Bestimmungs-Einrichtung |

# Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CA 2551988 A1
- US 7006587 B1
- US 6381251 B1
- US 2005220228 A